# EUROPÄISCHE PATENTANMELDUNG

(11) **EP 1 096 236 A2**
(43) Veröffentlichungstag der Anmeldung: **02.05.2001**
(21) Anmeldenummer: 00103344.8
(22) Anmeldetag: 22.02.2000
(51) Int. Cl.: G01F 1/66

(54) **Ultraschall-Durchflussmesser für Fluide**

(30) Priorität: 06.09.1999 SI 9900208
(71) Anmelder: Iskrameco, Merjenje in upravljanje energije d.d., 4000 Kranj (SI)
(72) Erfinder: Zdravko, Debeljak, 4240 Radovljica (SI); Rok, Hrovatin, 1360 Vrhnika (SI); Borut, Solar, 4220 Skofja Loka (SI); Damir, Zajec, 4000 Ktanj (SI)
(74) Vertreter: HOFFMANN - EITLE

(57) **Zusammenfassung**

Die Erfindung betrifft die Konstruktion eines Meßrohres **1** zur Strömungsmessung von Flüssigkeiten und Gasen, mit dem ein optimales Geschwindigkeitsprofil erreicht wird und somit die parasitären Wellen reduziert werden. Das Meßrohr **1** mit ebenen Wänden weist die Kammern auf, die in einer dieser Wände eingebaut sind. In den Kammern sind die Ultraschallwandler **T1**, **T2** und die Reflektoren **R1**, **R2** angeordnet. Durch die Reflexion an den Reflektoren **R1**, **R2** in den Kammern erhält das Schallfeld die gewünschte Form, und zwar sowohl am Eingang zur Fluidströmung als auch beim Auftreffen auf den Empfangswandler, der sich in der anderen Kammer befindet. Weiterer Vorteil des vorliegenden Patentes liegt neben der Stabilität des Fluids auch darin, daß durch die Konstruktion des Meßrohrs eine sehr geringe Empfindlichkeit auf eventuelle Druckstöße und sehr stark reduziertes Ablagern der Staubpartikeln an den Innenwänden des Meßrohrs bzw. an den Ultraschallwandlern erreicht wurde.

## Beschreibung

### Das technische Problem

Die Erfindung betrifft die Konstruktion eines Meßrohres zur Strömungsmessung von Flüssigkeiten und Gasen, mit dem ein optimales Geschwindigkeitsprofil erreicht wird und somit die parasitären Wellen reduziert werden.

### Stand der Technik

In den bisher bekannten Lösungen wird eine Anordnung beschrieben, bei der die Ultraschallwandler in der Wand des Meßrohres (EP 440867, EP 559938) oder in den vertieften Stützärmeln des Meßrohres (DE 4010148, DE 3941546) eingesetzt werden. Der vom Sendewandler ausgesandte Ultraschall wird auf dem Weg zum Emfangswandler mehrmals reflektiert. Durch die mehrfache Reflexion des Ultraschalls an der Rohrinnenwand läßt sich die mittlere Geschwindigkeit des Mediums genauer ermitteln.

Die oben genannten Lösungen haben den Nachteil, daß fluidische Störungen auftreten, die ein instationäres Geschwindigkeitsprofil verursachen. Die durch eine Änderung des Meßrohrquerschnitts hervorgerufene fluidische Störung führt zu einer Amplituden- und Phasen-Schwankung des Signals. Dies beeinträchtigt die Genauigkeit und Stabilität der vom Durchflussmesser gemessenen Werte. Die entstehenden parasitären Wellen wirken sich negativ auf das Verhältnis zwischen gewünschten und unerwünschten Signalen aus.

Eine Lösung ist in der DE 3941544 beschrieben. Die parasitären Wellen werden hier durch die stufenartigen Erhöhungen/Vertiefungen der Meßrohrinnenwand zusätzlich gedämpft. Aus der DE 4010148 ist eine ähnliche Lösung bekannt, bei der eine konvexe Krümmung der Meßrohrinnenwand verwendet wird.

Eine weitere Ausführung des Gas-Flüssigkeitszählers weist ein Meßrohr mit einem kreis- oder rechteckförmigen Querschnitt und in der Achse angeordnete Ultraschallwandler auf. Diese Lösungen sind in EP 580099, EP 907069 und EP 682773 beschrieben. Einer der Nachteile derartiger Zähler ist die mehrfach wechselnde Richtung der Gas-Flüssigkeitsströmung. Turbulenzen und ein verstärkter Druckabfall können die Folge sein. Dem wird durch besondere Konstruktionslösungen begegnet. Bei solchen Ausführungen sind Ultraschallwandler erforderlich, die das Meßrohr im Querschnitt homogen durchstrahlen.

Der Erfinder betrachtet die bestehenden Lösungen als verbesserungsbedürftig und stellt daher eine neue Meßrohrkonstruktion vor. Der Erfindung liegt die Aufgabe zugrunde, ein hydrodynamisch optimiertes Meßrohr für Ultraschallgaszähler zu schaffen, das durch die Anordnung der Ultraschallwandler das Aufkommen parasitärer Wellen verhindert. Die Erfindung ist dadurch gekennzeichnet, daß das Meßrohr des Zählers ebene Wände aufweist und die Ultraschallwandler jeweils in einem Rücksprung, d.h. außerhalb der Fluidströmung, angeordnet sind.

### Beschreibung der Erfindung

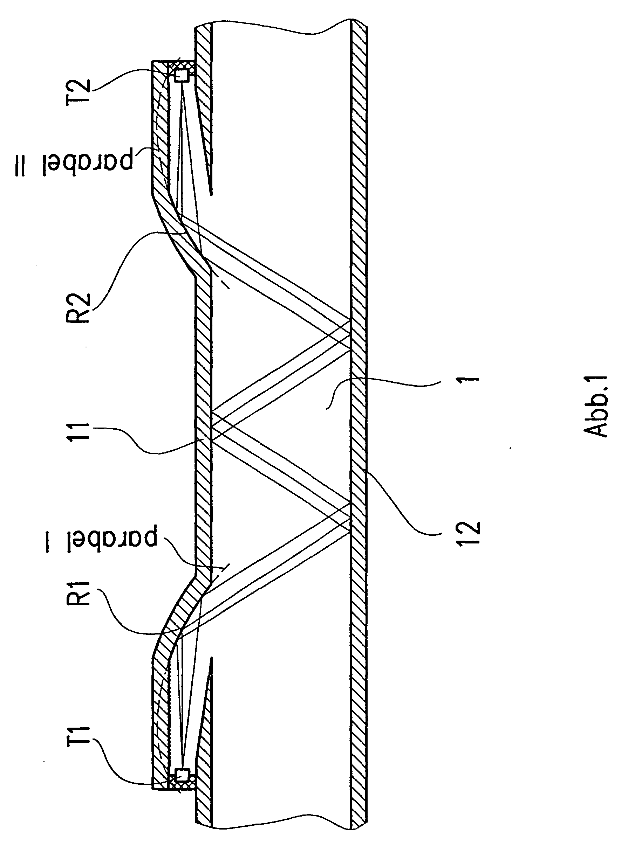

Die Erfindung umfaßt das Meßrohr mit ebenen Wänden und Kammern, die in einer dieser Wände eingebaut sind. In den Kammern sind die Ultraschallwandler und die Reflektoren angeordnet. Durch die Reflexion an den Reflektoren in den Kammern erhält das Schallfeld die gewünschte Form, und zwar sowohl am Eingang zur Fluidströmung als auch beim Auftreffen auf den Empfangswandler, der sich in der anderen Kammer befindet. Entsprechend den in bezug auf die Schallwege unterschiedlichen Verfahren der Fluiddurchflußmessung gibt es auch mehrere erfindungsgemäße Meßrohrvarianten. Die vier verschiedenen Varianten und die zugehörigen Ultraschallwandler werden in den Abbildungen 1 bis 4 dargestellt:
- Abb.1:: Der Längsschnitt des Meßrohres mit den Sende- und Empfangs-Ultraschallwandlern und den in den Rücksprüngen der Rohrwandung angeordneten parabolischen Reflektoren.
- Abb. 2:: Der Längsschnitt des Meßrohres, wie in Abb. 1, jedoch mit einem kürzeren Abstand zwischen den Ultraschallwandlern.
- Abb. 3:: Der Längsschnitt des Meßrohres mit den Sende- und Empfangs-Ultraschallwandlern und den in den Rücksprüngen angeordneten elliptischen Reflektoren.
- Abb. 4:: Der Längsschnitt des Meßrohres mit den Sende- und Empfangs-Ultraschallwandlern und den parabolischen Reflektoren. Der Schall bewegt sich in axialer Richtung durch das Meßrohr.

Die vier erfindungsgemäßen Varianten sind weiter unten detailliert beschrieben. Da die Verfahren zur Messung des Volumendurchflusses der Medien dem Stand der Technik entsprechen, werden sie hier nur insoweit explizit berücksichtigt, wie es zum Verständnis der neuen Lösung erforderlich ist.

Das in Abb. 1 dargestellte Meßrohr **1** weist eine flache obere Wand **11**, und, parallel zu ihr, eine untere Wand **12** auf. Die zwei Öffnungen, die sich in der oberen Wand **11** befinden, führen zu den Kammern, in welchen die Ultraschallwandler **T1** bzw. **T2** und die Reflektoren **R1** bzw. **R2** angeordnet sind. Die Ultraschallwandler sind so positioniert, daß ihre Aussende- bzw. Empfangsflächen zueinander orientiert sind. Die Reflektoren **R1** und **R2** sind parabolisch. Der vom Wandler **T1** bzw. **T2** ausgesandte Schall breitet sich nach der Reflexion vom Reflektor **R1** bzw. **R2** als divergenzlose Welle in die Fluidströmung aus. Daher entstehen im Meßrohr keine parasitären Wellen. Nach mehrfachen Reflexionen an den Wänden **11** und **12** tritt die Ultraschallwelle in die jeweilige Kammeröffnung ein und trifft auf den Reflektor **R1** bzw. **R2**. Die Reflektoren bündeln die Welle auf der Fläche des Wandlers **T1** bzw. **T2**, der sich im Brennpunkt des Reflektors **R1** bzw. **R2** befindet.

Die erfindungsgemäße Lösung bietet gegenüber den bisherigen Lösungen den Vorteil, daß die Wände **11** und **12** des Meßrohres 1 flach sind und keine fluidische Hindernisse besitzen. Das bedeutet, daß keine turbulenten Störungen in der Fluidströmung verursacht werden. Die Schallwelle wird vor dem Einlaß in das Meßrohr konvergent gesammelt, so daß keine parasitäre Welle entstehen kann. Die fluidische Stabilität des Geschwindigkeitprofils bedeutet eine erhöhte Genauigkeit der vom Zähler gemessenen Werte.

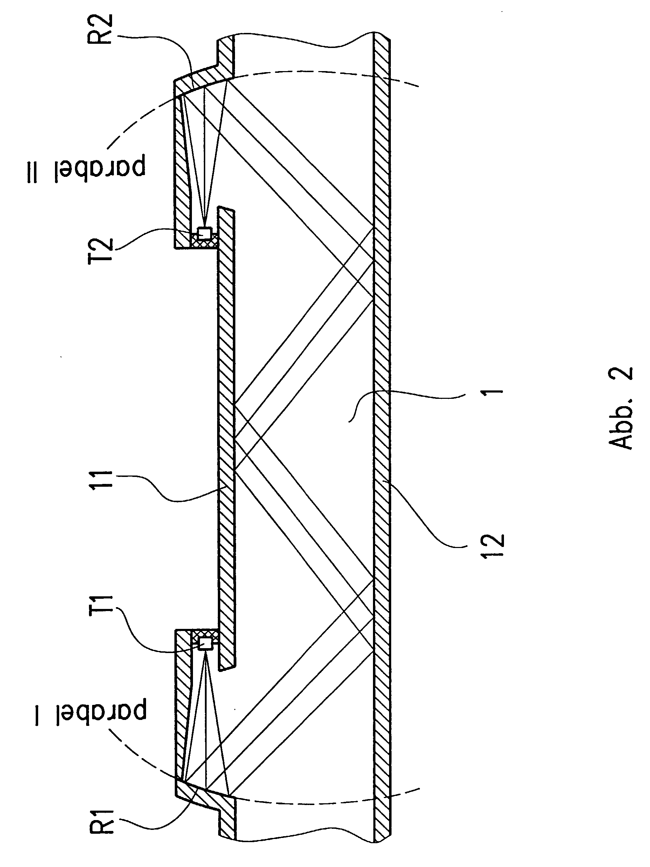

Der Unterschied zwischen der in Abb. 2 dargestellten Bauform des Meßrohres und der oben beschriebenen Lösung besteht darin, daß sich die Ultraschallwandler **T1** und **T2** im mittleren Teil des Rohres befinden und in Richtung des Ein- bzw. Auslasses des Meßrohres **1** senden und empfangen. Diese Lösung ist wegen der reduzierten Länge des Rohres **1** vorteilhaft.

Bei der erfindungsgemäßen Lösung des Meßrohres **1**, die in Abb. 1 dargestellt ist, wird der ausgesandte Schall nach der Reflexion in der Kammer um weniger als 90 Grad abgelenkt, während er bei der Lösung, die in Abb. 2 dargestellt ist, um mehr als 90 Grad abgelenkt wird. Der Einfallwinkel, mit dem die Schallwelle auf den parabolischen Reflektor **R1** bzw. **R2** trifft, ist bei der ersten Variante größer, und deswegen sind die Schallbündelbreite sowie die Kammeröffnung in der oberen Wand **11** des Meßrohres **1** kleiner. Die kleinere Öffnung verursacht eine geringere Störung der Strömung; deshalb ist die Variante 1 besonders geeignet für die Messung von Flüssigkeitsströmen, während sich die Variante 2 für die Messung von Gasströmen anbietet.

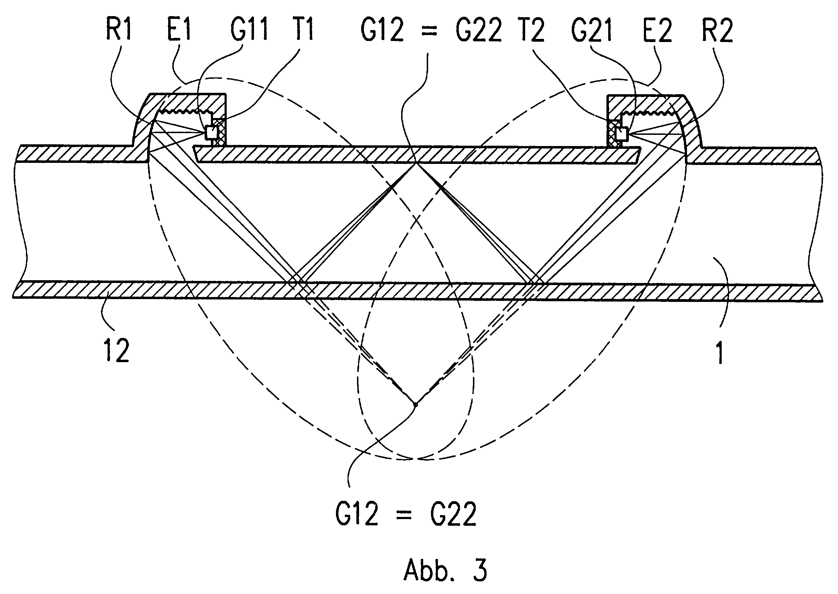

Im Meßrohr 1, das in Abb. 3 dargestellt ist, befinden sich die zwei Reflektoren **R1** und **R2**, deren Form dem Ausschnitt aus dem Mantel eines Rotationsellipsoiden entspricht. Die Ultraschallwandler **T1** und **T2** befinden sich im jeweiligen Brennpunkt **G11** bzw. **G21** dieser Rotationsellipsoiden **E1** und **E2**. Die Rotationsellipsoide sind so angeordnet, daß ihre Brennpunkte im Punkt **G12** bzw. **G22** zusammentreffen. Die untere Wand **12** des Meßrohrs ist so angeordnet, daß der Brennpunkt **G12** des Rotationsellipsoiden an die obere Wand des Meßrohrs gespiegelt. Die vom Ultraschallwandler **T1** bzw. **T2** kommenden Wellen treffen nach der Reflexion an **R1** bzw. **R2** auf die untere Wand **12** des Meßrohrs **1** und fokussieren dann im gespiegelten Brennpunkt **G12** bzw. **G22** an der oberen Wand **11** des Meßrohrs **1**. Nach der Reflexion bewegen sich die Wellen divergierend zum Reflektor **R1** bzw. **R2**. Hier werden sie erneut reflektiert, bevor sie im Empfänger **T1** bzw. **T2** fokussieren. Der Vorteil dieser Lösung liegt neben der Stabilität des Fluids auch darin, daß durch das konvergente Eintreten der Wellen in die Öffnung des Meßrohrs keine oder nur schwache parasitäre Wellen auftreten.

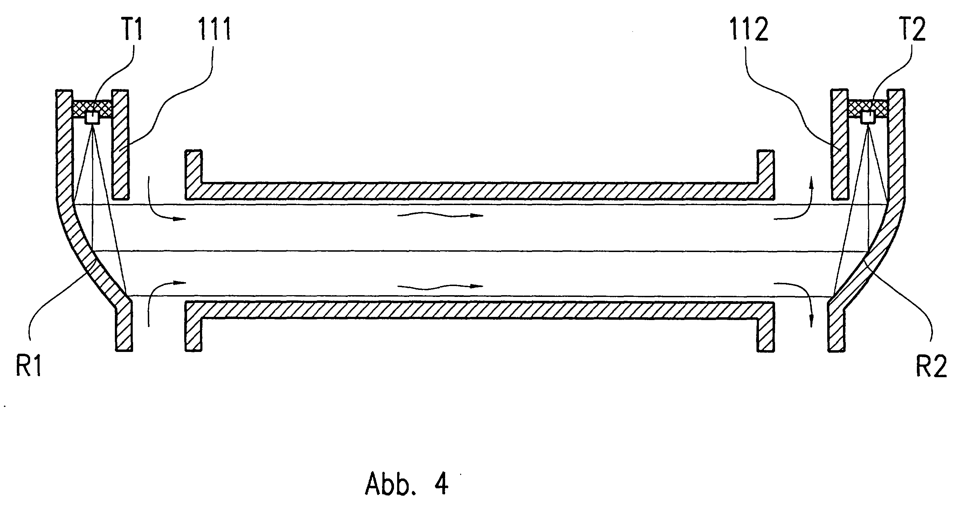

In Abb. 4 ist die Variante 4 des Meßrohrs zu sehen. Auch in diesem Fall befinden sich die Ultraschallwandler **T1** und **T2** mit den dazugehörigen Reflektoren **R1** und **R2** außerhalb der Strömung. Die beiden Reflektoren sind parabolisch geformt. Die vom Sender ausgehende nicht-divergente Ultraschallausbreitung tritt axial in das Fluid ein. Durch die parallele Ausbreitung des Ultraschalls im Meßrohr **1** treten keine sich schräg ausbreitenden parasitären Wellen auf. Die Ultraschallwandler **T1** und **T2** mit den dazugehörigen Reflektoren **R1** und **R2** sind aus der Strömung zurückgezogen, damit das Fluid ungestört in das Meßrohr ein- und wieder austreten kann. Ferner sind sie durch die Wand **111** bzw. **112** von der Hauptströmung des Fluides getrennt.

Neben den bereits erwähnten Vorteilen zeichnet sich diese technische Lösung durch eine sehr geringe Empfindlichkeit der Ultraschallwandler gegenüber eventuellen Druckstößen und Staubablagerungen aus, die trotz des Filters in das Meßrohr gelangen können.

Die Verfahren zur Durchflußmessung benötigen über die vorstehenden Beschreibungen sowie die Darstellung in Abb. 3 hinaus keine weitere Erklärung. Die Meßmethode zur Durchflußmessung unter Verwendung eines Meßrohrs, in welchem die Ultraschallwandler in einem der Brennpunkte des Rotationsellipsoiden liegen, wird im Patent DE 195 49 162 beschrieben.

## Patentansprüche

1. Das Meßrohr **1** des Ultraschall-Gasdurchflußzählers, gekennzeichnet durch die Ultraschallwandler **T1** und **T2** mit den dazugehörigen und außerhalb der Strömung angebrachten Reflektoren **R1** und **R2**.

2. Das Meßrohr **1** nach Anspruch 1, gekennzeichnet durch die parabolisch ausgeführten Reflektoren **R1** und **R2** und die Ausbreitung des Ultraschalls durch die Mitte des Meßrohrs **1**.

3. Das Meßrohr **1** nach Anspruch 2, gekennzeichnet dadurch, daß die Ultraschallwandler **T1** und **T2** mit den dazugehörigen Reflektoren **R1** und **R2** mittig im Meßrohr **1** angebracht sind und sie das Signal in der Richtung der Anschlüsse des Meßrohrs **1** senden.

4. Das Meßrohr **1** nach Anspruch 1, gekennzeichnet durch die aus dem Mantel eines Rotationsellipsoiden **E1** und **E2** ausgeschnittenen Reflektoren **R1** und **R2**, mit gemeinsamen Brennpunkten **G12**, **G22** und die in den Brennpunkten **G11** bzw. **G21** der Reflektoren **R1** und **R2** liegenden Sendeflächen der Ultraschallwandler **T1** und **T2**.

5. Das Meßrohr **1** nach Anspruch 1, gekennzeichnet durch die parabolischen Reflektoren **R1** und **R2**, an welchen der Ultraschall in der Weise reflektiert wird, daß er sich als eine ebene, nicht divergierende Welle in der Strömungsrichtung des Fluids fortbewegt.
